# FASCICULE DE BREVET EUROPEEN

(11) **EP 3 396 444 B1**
(45) Date de publication et mention de la délivrance du brevet: **17.08.2022**
(21) Numéro de dépôt: 18169367.2
(22) Date de dépôt: 25.04.2018
(51) Int. Cl.: G02F 1/1335, G02B 19/00, G02B 27/28

(54) **DISPOSITIF DE PRODUCTION D'UN FAISCEAU LUMINEUX POLARISÉ, DISPOSITIF DE GÉNÉRATION D'IMAGE ET AFFICHEUR TÊTE HAUTE**
VORRICHTUNG ZUR ERZEUGUNG EINES POLARISIERTEN LICHTSTRAHLS, BILDERZEUGUNGSVORRICHTUNG UND HEAD-UP-DISPLAY
DEVICE FOR PRODUCING A POLARISED LIGHT BEAM, IMAGE GENERATION DEVICE, AND HEAD-UP DISPLAY

(30) Priorité: 25.04.2017 FR 1753600
(43) Date de publication de la demande: 31.10.2018
(73) Titulaire: Valeo Comfort and Driving Assistance, 94046 Créteil Cedex (FR)
(72) Inventeur: BLANC, Eric, 94046 Créteil CEDEX (FR)
(74) Mandataire: Delplanque, Arnaud

(56) Documents cités:
- US-A1- 2006 066 192

## Description

### DOMAINE TECHNIQUE AUQUEL SE RAPPORTE L'INVENTION

La présente invention concerne les systèmes d'affichage.

Elle concerne plus particulièrement un dispositif de production d'un faisceau lumineux polarisé, un dispositif de génération d'image et un afficheur tête haute.

L'invention s'applique particulièrement avantageusement dans le cas où l'on souhaite utiliser un dispositif de production d'un faisceau lumineux polarisé pour éclairer un écran avec une intensité lumineuse élevée, tout en limitant l'échauffement du dispositif de production du faisceau lumineux.

### ARRIERE-PLAN TECHNOLOGIQUE

Il est connu d'utiliser, pour éclairer un écran, un dispositif de production d'un faisceau lumineux polarisé comprenant une source de lumière, un réflecteur et un filtre éclairé par la source de lumière et conçu pour transmettre une première polarisation de la lumière et pour réfléchir une seconde polarisation de la lumière.

La lumière transmise par le filtre présente ainsi la première polarisation et peut donc être utilisée pour rétroéclairer un écran, typiquement un écran à cristaux liquides comprenant un polariseur d'entrée dont l'axe correspond à cette première polarisation.

La lumière réfléchie par le filtre (qui présente la seconde polarisation) est en revanche renvoyée vers l'intérieur du dispositif, typiquement vers le réflecteur où elle peut être à nouveau réfléchie avec modification de sa polarisation, de sorte que cette lumière pourra (au moins en partie) être alors transmise à travers le filtre en direction de l'écran.

Cette technique, généralement désignée *"recyclage de la lumière",* permet d'améliorer le rendement lumineux du système. Les rayons lumineux réfléchis par le filtre, puis par le réflecteur, ont toutefois tendance, par construction, à être renvoyés en direction ou à proximité de la source de lumière, ce qui provoque un échauffement de la source de lumière qui peut conduire à son dysfonctionnement (ou, pour éviter un tel dysfonctionnement, à imposer une réduction de l'intensité lumineuse utilisée). Le document US 2006/066192 A1 divulgue un dispositif de production d'un faisceau lumineux comprenant une source de lumière, un filtre, ainsi qu'un premier réflecteur de forme évasée et un second réflecteur plan.

### OBJET DE L'INVENTION

Dans ce contexte, la présente invention propose un dispositif de production d'un faisceau lumineux selon la revendication 1, dans lequel le réflecteur comprend au niveau de la forme évasée au moins une première portion de surface conçue pour réfléchir, en direction du filtre, des rayons lumineux reçus (directement) de la source de lumière et au moins une seconde portion de surface conçue pour réfléchir, en direction du filtre, des rayons lumineux reçus du filtre après réflexion par le filtre.

Ainsi, une partie de la surface du réflecteur (seconde portion) n'est pas utilisée pour réfléchir vers le filtre la lumière reçue de la source de lumière ; cette partie de la surface du réflecteur ne participe donc pas à l'échauffement de la source de lumière évoqué ci-dessus, mais conserve toutefois un rôle optique puisqu'elle permet de renvoyer de la lumière vers le filtre (en modifiant sa polarisation).

D'autres caractéristiques définies dans les revendications dépendantes sont les suivantes :
- la seconde portion de surface est conçue pour réfléchir, en direction du filtre, des rayons lumineux reçus du filtre par réflexion sur le filtre de rayons lumineux directement reçus de la source de lumière ;
- la seconde portion de surface est conçue pour réfléchir, en direction du filtre, des rayons lumineux reçus du filtre par réflexion sur le filtre de rayons lumineux reçus du réflecteur ;
- la seconde portion de surface est conçue pour réfléchir, selon leur direction d'incidence, des rayons lumineux reçus du filtre par réflexion sur le filtre ;
- la seconde portion de surface est perpendiculaire à la direction principale d'émission de la source de lumière ;
- la seconde portion de surface est plane (en variante, la seconde portion de surface pourrait être courbe) ;
- la première portion de surface est conçue pour réfléchir lesdits rayons reçus de la source de lumière selon une direction perpendiculaire au plan d'extension du filtre (auquel cas les rayons lumineux réfléchis par le filtre sont précisément renvoyés, après réflexion sur le réflecteur, vers la source de lumière, ce qui entraîne un échauffement particulièrement importante de cette source de lumière).

L'invention propose également un dispositif de génération d'image comprenant un dispositif de production d'un faisceau lumineux tel que proposé ci-dessus et un écran disposé pour recevoir ledit faisceau lumineux.

Un tel écran, tel qu'un écran à cristaux liquides, comprend par exemple un polariseur d'entrée conçu pour transmettre la première polarisation.

L'invention propose enfin un afficheur tête haute comprenant un dispositif de génération d'image comme il vient d'être indiqué et un dispositif de projection d'images adapté à transmettre en direction d'une lame partiellement transparente les images générées par le dispositif de génération d'image.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un afficheur tête haute ;
- la figure 2 représente un premier exemple de dispositif de production d'un faisceau lumineux polarisé conforme à l'invention ;
- la figure 3 représente un réflecteur du dispositif de la figure 2, ici dans le cas d'une source de lumière localisée sur une zone unique ;
- la figure 4 représente une autre possibilité de réalisation d'un tel réflecteur ; et
- la figure 5 représente un second exemple de dispositif de production d'un faisceau lumineux polarisé conforme à l'invention.

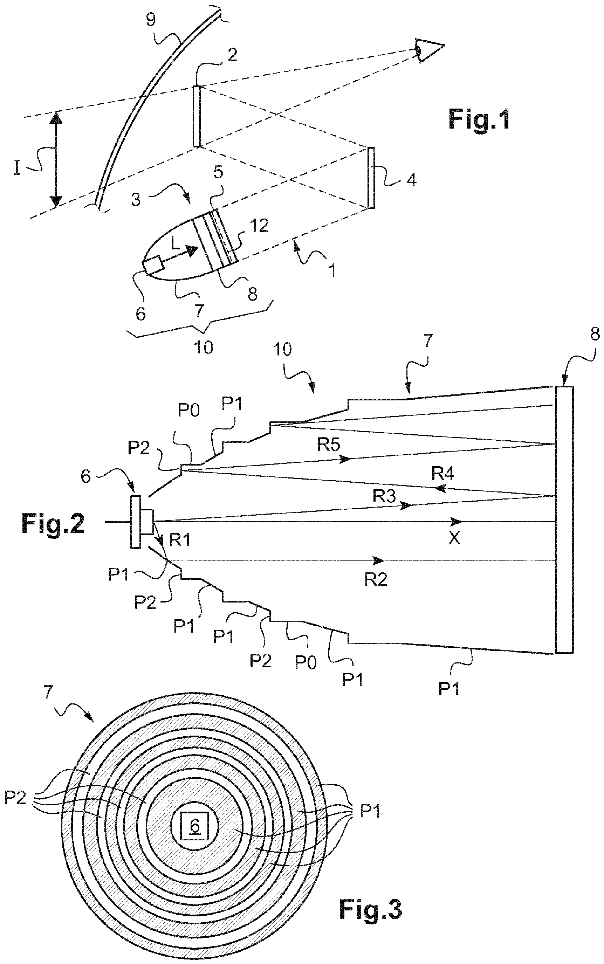

Sur la figure 1, on a schématiquement représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle l et les informations éventuelles qu'elle contient sans avoir à détourner le regard.

À cet effet, l'afficheur 1 comprend une lame partiellement transparente 2 (également dénommée *"lame semi-transparente"*) placée dans le champ de vision du conducteur, un dispositif de génération d'images 3 adapté à générer des images et un dispositif de projection 4 d'images adapté à renvoyer, en direction de ladite lame partiellement transparente 2, les images générées par le dispositif de génération d'images 3.

Plus précisément, la lame partiellement transparente 2 est ici un combineur 2, c'est-à-dire une lame partiellement transparente dédiée à l'afficheur tête haute 1.

Un tel combineur 2 est ici placé entre le pare-brise 9 du véhicule et les yeux du conducteur.

En variante, la lame partiellement transparente pourrait être confondue avec le pare-brise du véhicule. Autrement dit, dans cette variante, c'est le pare-brise du véhicule qui a la fonction de lame partiellement transparente pour l'afficheur tête haute.

Par ailleurs, ici, le dispositif de projection d'images comprend un miroir de repliement 4 agencé de manière à réfléchir les images générées par le dispositif de génération 3 d'images en direction de la lame partiellement transparente 2. Ici, ledit miroir de repliement est un miroir plan.

En variante, le dispositif de projection d'images pourrait comprendre une pluralité de miroirs et/ou d'autres éléments optiques tels qu'une lentille par exemple.

Le dispositif de génération 3 d'images comprend quant à lui un dispositif de production d'un faisceau lumineux polarisé 10 et un écran 5 rétroéclairé par ce dispositif 10.

Le dispositif de production d'un faisceau lumineux polarisé 10 comprend au moins une source de lumière 6, un réflecteur 7 et un filtre polariseur 8 illuminé par la source de lumière 6, à la fois directement et après réflexion sur le réflecteur 7. On a ainsi schématiquement représenté par la flèche L sur la figure 1 la transmission de la lumière de la source de lumière 6 vers le filtre polariseur 8. Le comportement de la lumière au sein de ce dispositif de production d'un faisceau lumineux polarisé 10 est naturellement bien plus complexe, comme expliqué dans la suite.

La source de lumière 6 comprend au moins une diode électroluminescente (ou LED pour "*Light Emitting Diode"*), et en général une pluralité de telles diodes électroluminescentes. La lumière émise par la source de lumière 6 n'est donc pas polarisée.

L'écran 5 est un écran à cristaux liquides (ou LCD pour *"Liquid Crystal Display*"), ici à transistors en couches minces (ou TFT pour *"Thin-Film Transistor*"). Un tel écran 5 comprend en général, typiquement au niveau de sa face qui reçoit la lumière du dispositif de production 10, un polariseur d'entrée 12 qui ne transmet aux couches suivantes de l'écran que les composantes de la lumière ayant une polarisation donnée (dite *"première polarisation"* dans la suite), les autres composantes étant par exemple absorbées par le polariseur d'entrée 12.

La lumière polarisée transmise par le polariseur d'entrée 12 traverse les cristaux liquides de l'écran 5 et sa polarisation est potentiellement modifiée selon le champ électrique appliqué aux cristaux liquides pour le pixel concerné. La lumière traverse ensuite un polariseur de sortie de sorte que, pour chaque pixel, l'intensité lumineuse en sortie dépend du champ électrique appliqué (par un transistor commandé) pour le pixel concerné.

Le filtre polariseur 8 du dispositif de production 10 est conçu pour transmettre la première polarisation susmentionnée de la lumière et pour réfléchir une seconde polarisation de la lumière (par conséquent distincte de la première polarisation).

Un tel agencement permet de transmettre vers l'écran 5 les composantes de lumière ayant la première polarisation, qui seront utiles au fonctionnement de l'écran 5, et de réfléchir vers l'intérieur du dispositif de production 10 les composantes ayant la seconde polarisation, qui sont inutiles au fonctionnement de l'écran 5 puisqu'absorbées dans le polariseur d'entrée 12 (ce qui provoque de plus un échauffement important au niveau de ce polariseur d'entrée 12).

La lumière réfléchie vers l'intérieur du dispositif de production 10 pourra alors subir des modifications de sa polarisation (principalement par réflexion sur le réflecteur 7) et une partie de cette lumière (ayant alors la première polarisation) sera donc finalement transmise à travers le filtre polariseur 8 et à destination de l'écran 5.

On remarque que, si le réflecteur 7 a une forme évasée (ou concave) dans au moins un plan de section comme schématiquement représenté en figure 1 afin de renvoyer la lumière en direction du filtre polariseur 8, la forme du réflecteur 7 perpendiculairement à ce plan de section est adaptée au nombre de sources de lumière 6. Ainsi, en cas d'utilisation d'une pluralité de diodes électroluminescentes alignées en tant que sources de lumière 6, le réflecteur pourrait avoir une section rectangulaire ou droite perpendiculairement au plan de section représenté en figure 1. Autrement dit, le réflecteur 7 pourrait avoir une forme cylindrique (au sens général) avec une forme évasée dans un plan de section et des génératrices perpendiculaires au plan de section.

On décrit à présent en référence aux figures 2 et 3 un premier exemple de dispositif de production d'un faisceau lumineux polarisé conforme à l'invention (la figure 3 correspond au cas d'une source de lumière 6 unique). Dans le cas mentionné ci-dessus où le réflecteur 7 aurait une forme cylindrique, la figure 2 représente une vue en section perpendiculairement à la direction d'une génératrice du cylindre concerné.

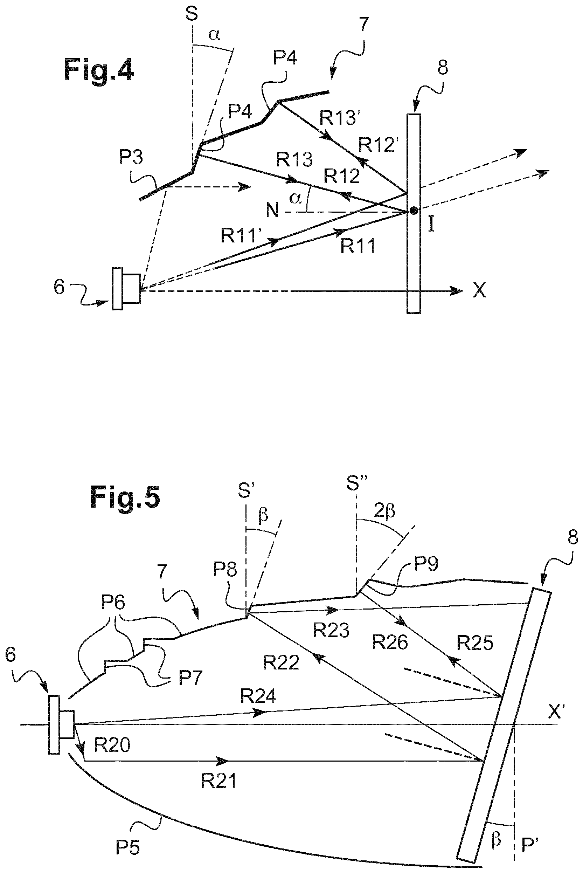

Dans cet exemple, la surface interne du réflecteur 7 présente une symétrie de révolution autour d'un axe X sur lequel est disposée la source de lumière 6. Cet axe X est ici en outre perpendiculaire au plan d'extension du filtre polariseur 8. L'axe X correspondant par ailleurs dans l'exemple décrit à la direction principale d'émission de la source de lumière 6. D'autres dispositions sont toutefois envisageables, comme expliqué par exemple ci-dessous en référence à la figure 5.

Le réflecteur 7 comprend une pluralité de portions de surface P1 disposées sur une surface parabolique au foyer de laquelle est placée la source de lumière 6. Ces portions de surface P1 permettent ainsi de réfléchir, en direction du filtre polariseur 8 (ici précisément selon l'axe X), des rayons lumineux reçus de la source de lumière 6. On a représenté à titre d'exemple sur la figure 2 la réflexion d'un rayon lumineux R1 reçu de la source de lumière 6 par une portion de surface P1 du réflecteur 7, le rayon lumineux réfléchi R2 étant dirigé (ici selon l'axe X) vers le filtre polariseur 8.

Le réflecteur 7 comprend également une pluralité de portions de surface P2 planes et parallèles au plan d'extension du filtre polariseur 8. Autrement dit, les portions de surface P2 sont planes et perpendiculaires à l'axe X précité. Ces portions de surface P2 permettent de réfléchir, en direction du filtre polariseur 8, des rayons lumineux reçus du filtre polariseur 8 après réflexion sur le filtre polariseur 8.

Pour illustrer le comportement optique des portions de surface P2, on a représenté un rayon lumineux R3 émis par la source de lumière 6 en direction du filtre polariseur 8. Du fait des propriétés du filtre polariseur 8 présentées plus haut, la composante du rayon lumineux R3 ayant la seconde polarisation est réfléchie en un rayon R4 en direction d'une portion de surface P2.

Lorsqu'il atteint cette portion de surface P2, le rayon lumineux R4 est réfléchi par la portion de surface P2 en un rayon lumineux R5 dirigé vers le filtre polariseur 8. On remarque que la polarisation du rayon lumineux R4 est modifiée par la réflexion sur la portion de surface P2 de sorte qu'une partie au moins du rayon lumineux R5 est transmise à travers le filtre polariseur 8.

Comme illustré en figure 2, des réflexions multiples peuvent éventuellement de produire entre le filtre polariseur 8 et les portions de surface P2 (une partie du flux lumineux, ayant la première polarisation, étant toutefois transmise au niveau du filtre polariseur 8).

On remarque que, vu leur disposition, les portions de surface P2 ne peuvent pas être directement atteintes par les rayons lumineux émis par la source de lumière 6 et ne jouent donc aucun rôle optique pour ces rayons lumineux.

Le réflecteur 7 comprend en outre des portions de surface P0 sans rôle optique (ces portions de surface P0 formant ici des cylindres droits d'axe X) mais formant la liaison mécanique entre les portions de surface P1 et les portions de surface P2.

Le positionnement et la surface cumulée des portions de surface P1 d'une part et des portions de surface P2 d'autre part peuvent être modifiées selon les applications envisagées.

En effet, les portions de surface P1 permettent de réfléchir en direction du filtre polariseur 8 les rayons lumineux reçus de la source de lumière 6, mais génèrent un échauffement au niveau de cette source de lumière 6 du fait que ces portions de surfaces P1 réfléchissent vers la source de lumière 6 les rayons lumineux réfléchis par le filtre polariseur 8.

Les portions de surface P2 réfléchissent quant à elles en direction du filtre polariseur 8 des rayons lumineux réfléchis par le filtre polariseur 8 et ne participent donc pas à un échauffement de la source de lumière 6.

On peut ainsi choisir la proportion entre la surface cumulée des portions de surface P1 et la surface cumulée des portions de surface P2 de manière à obtenir un échauffement qui ne soit pas problématique pour la source de lumière 6.

La surface cumulée des portions de surface P2 est ainsi par exemple comprise entre 50% et 150% de la surface cumulée des portions de surface P1.

Le positionnement des portions de surface P2 peut quant à lui être choisi en fonction de la distribution spatiale de la lumière émise par la source de lumière 6.

Par exemple, si la source de lumière 6 est directive, c'est-à-dire qu'une partie importante du flux lumineux est émise par la source de lumière 6 autour de l'axe X (comme dans le cas d'une distribution gaussienne du flux lumineux émis par la source de lumière 6), les portions de surface P2 peuvent être positionnées (majoritairement ou uniquement) dans la région du réflecteur 7 située à proximité (et ici autour) de la source de lumière 6. C'est en effet vers cette région qu'est réfléchie dans ce cas (par le filtre polariseur 8) une partie importante (ayant la seconde polarisation) du flux lumineux émis par la source de lumière 6.

La région du réflecteur 7 située à proximité du filtre polariseur 8 peut alors comporter (majoritairement ou uniquement) des portions de surface P1.

La figure 4 représente une variante de réalisation du réflecteur 7.

Dans cette variante également, le réflecteur 7 comprend des portions de surface P3 conçues pour réfléchir en direction du filtre polariseur 8 des rayons lumineux reçus directement de la source de lumière 6. Ces portions de surface P3 sont analogues aux portions de surface P1 de la figure 2.

Le réflecteur 7 comprend en outre des portions de surface P4 conçues pour réfléchir selon leur direction d'incidence des rayons lumineux R12, R12' reçus du filtre polariseur 8 après émission par la source de lumière 6 puis réflexion sur le filtre polariseur 8. Autrement dit, chaque portion de surface P4 est perpendiculaire, en au moins un point de cette portion de surface P4, au rayon qui est incident R12, R12' en ce point du fait d'une réflexion sur le filtre polariseur 8 d'un rayon R11, R11' émis par la source de lumière 6.

Ces rayons lumineux réfléchis par les portions de surface P4 sont donc nécessairement renvoyés en direction du filtre polariseur 8 d'où ils proviennent.

On rappelle que la réflexion sur le filtre polariseur 8 est généralement partielle (car elle ne concerne que la composante du flux lumineux concerné ayant la seconde polarisation).

Ainsi, certains des rayons lumineux émis par la source de lumière 6 (tels que les rayons lumineux R11 et R11' montrés en figure 4) sont réfléchis (en général partiellement) sur le filtre polariseur 8 (par exemple en un point d'incidence l) en un rayon lumineux R12, R12'.

Le rayon lumineux R12, R12' réfléchi par le filtre polariseur 8 est alors incident sur une portion de surface P4 conçue (comme déjà mentionné et expliqué à nouveau plus bas) pour être perpendiculaire à ce rayon lumineux incident R12, R12', de sorte que le rayon lumineux R13, R13' réfléchi est renvoyé selon la direction d'incidence vers le filtre polariseur 8.

Comme déjà indiqué, à chaque réflexion sur le filtre polariseur 8, une partie du flux lumineux concerné (partie correspondant à la composante ayant la première polarisation) est transmise à travers le filtre polariseur 8 (ici en direction de l'écran 5) de sorte que seule une faible proportion de la lumière pourrait éventuellement être réfléchie en direction de la source de lumière 6 par réflexion des rayons sur le filtre polariseur 8, puis sur les surfaces P3, ce qui ne provoquerait donc qu'un échauffement limité au niveau de la source de lumière 6.

La présence des portions de surface P4 permet ainsi de réduire l'échauffement de la source de lumière 6 par rapport à une solution utilisant uniquement une surface parabolique pour le réflecteur, en donnant toutefois aux portions de surface P4 un rôle optique grâce auquel ces portions de surface P4 améliorent l'efficacité lumineuse du système.

Comme dans le mode de réalisation des figures 2 et 3, les portions de surface P3 (correspondant aux portions de surface P1 des figures 2 et 3) sont paraboliques, la source de lumière 6 étant placée au foyer de ces surfaces paraboliques.

Pour construire chaque portion de surface P4, on détermine par exemple l'orientation du rayon lumineux R12, R12' incident en au moins un point de cette portion de surface P4 en provenance du filtre polariseur 8, après émission par la source de lumière 6 et réflexion en un point l sur le filtre polariseur 8.

Si on note α l'angle d'incidence au point l du rayon R11 concerné (l'angle d'incidence étant mesuré par rapport à la normale N à la surface du filtre polariseur 8), ce rayon R11 est par définition réfléchi (sous forme d'un rayon R12) en direction de la portion de surface P4, en formant le même angle α par rapport à la normale N.

Puisque la portion de surface P4 est perpendiculaire (en au moins un point) au rayon R12 pour avoir les propriétés recherchées, la portion de surface P4 forme au point concerné ce même angle α avec un plan S parallèle à la surface du filtre polariseur 8.

Selon une possibilité de réalisation, la portion de surface P4 peut être plane, orientée de l'angle α par rapport au plan S prédéfini.

Selon une autre possibilité de réalisation, la portion de surface P4 peut être courbe et être perpendiculaire en chaque point de sa surface au rayon lumineux R12 incident reçu au point concerné après émission par la source de lumière 6 et réflexion (partielle) sur le filtre polariseur 8.

En variante, les surfaces P4 pourraient être orientées vers des zones spécifiques du filtre polariseur 8 afin d'améliorer l'homogénéité de la distribution de lumière sur la surface de ce filtre polariseur 8 (et donc sur la surface de l'écran 5).

Comme expliqué plus haut à propos de l'exemple des figures 2 et 3, la proportion des portions de surface P3 et des portions de surface P4 est variable en fonction de la réduction d'échauffement de la source de lumière 6 que l'on souhaite obtenir.

On décrit à présent en référence à la figure 5 un second exemple de dispositif de production d'un faisceau lumineux polarisé conforme à l'invention.

Dans cet exemple, la direction principale d'émission de la source de lumière 6 (direction référencée X' en figure 5) n'est pas perpendiculaire au plan d'extension du filtre polariseur 8.

Par conséquent, pour une partie P5 du réflecteur 7 (partie inférieure en figure 5), les rayons lumineux R20 émis par la source de lumière 6 puis réfléchis par cette partie P5 du réflecteur 7 (rayon lumineux R21) ne peuvent pas être renvoyés, par réflexion partielle sur le filtre polariseur 8, vers la source de lumière 6. Cette partie P5 du réflecteur 7 ne pose donc pas de problème d'échauffement de la source de lumière 6.

On remarque par ailleurs que, du fait de l'orientation du filtre polariseur 8, les rayons lumineux réfléchis par ce filtre polariseur 8 sont en grande partie dirigés vers une partie seulement du réflecteur 7 (partie supérieure dans le cas de la figure 5) et qu'il n'y aurait donc pas d'intérêt ici à prévoir dans la partie P5 (partie inférieure) des portions de surfaces conçues pour réfléchir des rayons lumineux reçus du filtre polariseur 8.

Le réflecteur 7 comprend par ailleurs (ici dans sa partie supérieure) :
- des portions de surface P6 conçues pour réfléchir, en direction du filtre polariseur 8, des rayons lumineux reçus de la source de lumière 6 ;
- des portions de surface P7, P8, P9 conçues pour réfléchir, en direction du filtre polariseur 8, des rayons lumineux reçus du filtre polariseur 8 après réflexion par le filtre polariseur 8.

Parmi ces dernières portions de surface, une portion de surface P8 est conçue pour réfléchir en direction du filtre polariseur 8 (rayon lumineux R23) un rayon lumineux R22 reçu du filtre polariseur 8 du fait de la réflexion (sur le filtre polariseur 8) d'un rayon lumineux R21 réfléchi par la partie (ici inférieure) P5 du réflecteur 7.

Une autre portion de surface P9 est conçue pour réfléchir selon sa direction d'incidence un rayon lumineux R25 reçu du filtre polariseur 8 après émission par la source de lumière 6 (rayon R24) puis réflexion sur le filtre polariseur 8 (de manière analogue aux portions de surface P4 de la figure 4). Le rayon lumineux après réflexion sur la portion de surface P9 est référencé R26 en figure 5.

Si on note β l'angle formé entre le filtre polariseur 8 et un plan P' perpendiculaire à la direction principale X', la portion de surface P8 présente (en au moins un point) une surface formant un angle β par rapport à un plan S' parallèle au plan P'. Ainsi, un rayon lumineux R21 dirigé (au moins approximativement) selon la direction principale X' et réfléchi par le filtre polariseur 8 (rayon R22) est réfléchi par la portion de surface P8 (au moins approximativement) selon la direction principale X', en direction du filtre polariseur 8.

De même, la portion de surface P9 présente (en au moins un point) une surface formant un angle 2β par rapport à un plan S" parallèle au plan P'. Ainsi, un rayon lumineux R24 dirigé (ici approximativement) selon la direction principale X' et réfléchi par le filtre polariseur 8 (rayon R25) est réfléchi par la portion de surface P9 (au moins approximativement) selon sa direction d'incidence sur la portion de surface P9.

Ainsi, dans le cas de la figure 5, chaque portion de surface P8, P9 (ou un plan tangent à cette portion de surface) peut par exemple former un angle compris entre β et 2β par rapport au plan P' perpendiculaire à la direction principale X' (β étant comme déjà indiqué l'angle formé entre le filtre polariseur 8 et le plan P').

Comme indiqué pour les précédents exemples décrits, les portions de surface P7, P8, P9 pourront être positionnées en fonction de l'application concernée. Les portions de surface P8 pourront ainsi par exemple être placées dans une première région du réflecteur 7 située du côté de la source de lumière 6, tandis que les portions de surface P9 pourront être placées dans une seconde région du réflecteur 7 située du côté du filtre polariseur 8.

## Revendications

1. Dispositif (10) de production d'un faisceau lumineux polarisé comprenant :
- une source de lumière (6) ;
- un réflecteur (7) de forme évasée dans au moins un plan de section;
- un filtre (8) éclairé par la source de lumière (6) et conçu pour transmettre une première polarisation de la lumière et pour réfléchir une seconde polarisation de la lumière,
**caractérisé en ce que** le réflecteur (7) comprend au niveau de la forme évasée au moins une première portion de surface (P1 ; P3 ; P5 ; P6) conçue pour réfléchir, en direction du filtre (8), des rayons lumineux (R1 ; R20) reçus de la source de lumière (6) et au moins une seconde portion de surface (P2 ; P4 ; P6 ; P8 ; P9) conçue pour réfléchir, en direction du filtre (8), des rayons lumineux (R4 ; R12 ; R12' ; R22 ; R25) reçus du filtre (8) après réflexion par le filtre (8).

2. Dispositif selon la revendication 1, dans lequel la seconde portion de surface (P2 ; P4 ; P9) est conçue pour réfléchir, en direction du filtre (8), des rayons lumineux (R4 ; R12 ; R12' ; R25) reçus du filtre (8) par réflexion sur le filtre (8) de rayons lumineux (R3 ; R11 ; R11' ; R24) directement reçus de la source de lumière (6).

3. Dispositif selon la revendication 1, dans lequel la seconde portion de surface (P8) est conçue pour réfléchir, en direction du filtre (8), des rayons lumineux (R22) reçus du filtre (8) par réflexion sur le filtre (8) de rayons lumineux (R21) reçus du réflecteur (7).

4. Dispositif selon l'une des revendications 1 à 3, dans lequel la seconde portion de surface (P4 ; P9) est conçue pour réfléchir, selon leur direction d'incidence, des rayons lumineux (R12 ; R12' ; R25) reçus du filtre (8) par réflexion sur le filtre (8).

5. Dispositif selon l'une des revendications 1 à 3, dans lequel la seconde portion de surface (P2 ; P7) est perpendiculaire à la direction principale d'émission (X ; X') de la source de lumière (6).

6. Dispositif selon l'une des revendications 1 à 5, dans lequel la seconde portion de surface est plane.

7. Dispositif selon l'une des revendications 1 à 6, dans lequel la première portion de surface (P1) est conçue pour réfléchir lesdits rayons (R1) reçus de la source de lumière (6) selon une direction (X) perpendiculaire au plan d'extension du filtre (8).

8. Dispositif de génération d'image (3) comprenant un dispositif de production d'un faisceau lumineux (10) selon l'une des revendications précédentes et un écran (5) disposé pour recevoir ledit faisceau lumineux.

9. Dispositif selon la revendication 8, dans lequel ledit écran (5) comprend un polariseur d'entrée (12) conçu pour transmettre la première polarisation.

10. Afficheur tête haute (1) comprenant un dispositif de génération d'image (3) selon la revendication 9 et un dispositif de projection d'images (4) adapté à transmettre en direction d'une lame partiellement transparente (2) les images générées par le dispositif de génération d'image (3).

## Patentansprüche

1. Vorrichtung (10) zur Erzeugung eines polarisierten Lichtbündels umfassend:
- eine Lichtquelle (6);
- einen Reflektor (7) mit aufgeweiteter Form in wenigstens einer Querschnittsebene;
- einen Filter (8), der von der Lichtquelle (6) beleuchtet wird und dafür ausgelegt ist, eine erste Polarisierung des Lichts zu übertragen und eine zweite Polarisierung des Lichts zu reflektieren,
**dadurch gekennzeichnet, dass** der Reflektor (7) an der aufgeweiteten Form wenigstens einen ersten Oberflächenteilbereich (P1; P3; P5; P6), der dafür ausgelegt ist, Lichtstrahlen (R1; R20) in Richtung des Filters (8) zu reflektieren, die von der Lichtquelle (6) empfangen werden, und wenigstens einen zweiten Oberflächenteilbereich (P2; P4; P6; P8; P9) umfasst, der dafür ausgelegt ist, Lichtstrahlen (R4; R12; R12'; R22; R25) in Richtung des Filters (8) zu reflektieren, die nach Reflexion durch den Filter (8) vom Filter (8) empfangen werden.

2. Vorrichtung nach Anspruch 1, wobei der zweite Oberflächenteilbereich (P2; P4; P9) dafür ausgelegt ist, Lichtstrahlen (R4; R12; R12'; R25) in Richtung des Filters (8) zu reflektieren, die vom Filter (8) durch Reflexion von Lichtstrahlen (R3; R11; R11'; R24) auf dem Filter (8) empfangen werden, die direkt von der Lichtquelle (6) empfangen werden.

3. Vorrichtung nach Anspruch 1, wobei der zweite Oberflächenteilbereich (P8) dafür ausgelegt ist, Lichtstrahlen (R22) in Richtung des Filters (8) zu reflektieren, die vom Filter (8) durch Reflexion von Lichtstrahlen (R21) auf dem Filter (8) empfangen werden, die vom Reflektor (7) empfangen werden.

4. Vorrichtung nach einem der Ansprüche 1 bis 3, wobei der zweite Oberflächenteilbereich (P4; P9) dafür ausgelegt ist, Lichtstrahlen (R12; R12'; R25), die vom Filter (8) durch Reflexion auf dem Filter (8) empfangen werden, je nach ihrer Einfallrichtung zu reflektieren.

5. Vorrichtung nach einem der Ansprüche 1 bis 3, wobei der zweite Oberflächenteilbereich (P2; P7) senkrecht zur Hauptemissionsrichtung (X; X') der Lichtquelle (6) verläuft.

6. Vorrichtung nach einem der Ansprüche 1 bis 5, wobei der zweite Oberflächenteilbereich eben ist.

7. Vorrichtung nach einem der Ansprüche 1 bis 6, wobei der erste Oberflächenteilbereich (P1) dafür ausgelegt ist, die Strahlen (R1), die von der Lichtquelle (6) empfangen werden, in einer Richtung (X) senkrecht zur Erstreckungsebene des Filters (8) zu reflektieren.

8. Bilderzeugungsvorrichtung (3) umfassend eine Vorrichtung zur Erzeugung eines Lichtbündels (10) nach einem der vorhergehenden Ansprüche und einen Schirm (5), der dafür angeordnet ist, das Lichtbündel zu empfangen.

9. Vorrichtung nach Anspruch 8, wobei der Schirm (5) einen Eingangspolarisator (12) umfasst, der dafür ausgelegt ist, die erste Polarisierung zu übertragen.

10. Head-up-Display (1) umfassend eine Bilderzeugungsvorrichtung (3) nach Anspruch 9 und eine Bildprojektionsvorrichtung (4), die geeignet ist, die Bilder, die von der Bilderzeugungsvorrichtung (3) erzeugt werden, in Richtung eines teilweise transparenten Blattes (2) zu übertragen.

## Claims

1. Device (10) for producing a polarized light beam, comprising:
- a light source (6);
- a reflector (7) of flared shape in at least one cross-sectional plane;
- a filter (8) that is illuminated by the light source (6) and that is designed to transmit a first polarization of the light and to reflect a second polarization of the light,
**characterized in that** the reflector (7) comprises, in the flared shape, at least one first surface segment (P1; P3; P5; P6) designed to reflect, in the direction of the filter (8), light rays (R1; R20) received from the light source (6), and at least one second surface segment (P2; P4; P6; P8; P9) designed to reflect, in the direction of the filter (8), light rays (R4; R12; R12'; R22; R25) received from the filter (8) after reflection by the filter (8).

2. Device according to Claim 1, wherein the second surface segment (P2; P4; P9) is designed to reflect, in the direction of the filter (8), light rays (R4; R12; R12'; R25) received from the filter (8) by reflection from the filter (8) of light rays (R3; R11; R11'; R24) received directly from the light source (6).

3. Device according to Claim 1, wherein the second surface segment (P8) is designed to reflect, in the direction of the filter (8), light rays (R22) received from the filter (8) by reflection from the filter (8) of light rays (R21) received from the reflector (7).

4. Device according to one of Claims 1 to 3, wherein the second surface segment (P4; P9) is designed to reflect, in their direction of incidence, light rays (R12; R12'; R25) received from the filter (8) by reflection from the filter (8).

5. Device according to one of Claims 1 to 3, wherein the second surface segment (P2; P7) is perpendicular to the main direction of emission (X; X') of the light source (6) .

6. Device according to one of Claims 1 to 5, wherein the second surface segment is planar.

7. Device according to one of Claims 1 to 6, wherein the first surface segment (P1) is designed to reflect said rays (R1) received from the light source (6) in a direction (X) perpendicular to the plane of extension of the filter (8).

8. Image-generating device (3) comprising a device for producing a light beam (10) according to one of the preceding claims and a screen (5) placed to receive said light beam.

9. Device according to Claim 8, wherein said screen (5) comprises an entrance polarizer (12) designed to transmit the first polarization.

10. Head-up display (1) comprising an image-generating device (3) according to Claim 9 and an image-projecting device (4) suitable for transmitting in the direction of a partially transparent plate (2) the images generated by the image-generating device (3).
